Europäisches Patentamt

European Patent Office

Office européen des brevets

(11) Veröffentlichungsnummer: **0 386 497**

**A2**

## (12) EUROPÄISCHE PATENTANMELDUNG

(21) Anmeldenummer: **90102881.1**

(22) Anmeldetag: **14.02.90**

(51) Int. Cl.⁵: **F28D 1/03, F24D 19/06**

(30) Priorität: **10.03.89 DE 8902985 U**

(43) Veröffentlichungstag der Anmeldung:
**12.09.90 Patentblatt 90/37**

(84) Benannte Vertragsstaaten:
**AT BE CH DE FR GB LI LU NL**

(71) Anmelder: **KERMI GmbH**
**Pankofen-Bahnhof 1**
**D-8350 Plattling(DE)**

(72) Erfinder: **Heigl, Adolf,**
**Am Moosbuckl 1,**
**D-8499 Trebersdorf(DE)**

(74) Vertreter: **Dipl.-Ing. Schwabe, Dr. Dr.**
**Sandmair, Dr. Marx**
**Stuntzstrasse 16**
**D-8000 München 80(DE)**

(54) **Badheizkörper.**

(57) Die Erfindung betrifft einen Heizkörper mit zumindest einer im wesentlichen rechteckigen Heizkörperplatte, die parallele wasserführende Kanäle aufweist, an denen auf der Rückseite der Heizkörperplatte zumindest ein gewellter Konvektor angebracht ist. Die Längserstreckung des Konvektors verläuft dabei quer zur Längserstreckung der Kanäle und parallel zur Bauhöhe des Heizkörpers

Fig.1

EP 0 386 497 A2

## Badheizkörper

Die Erfindung betrifft einen Heizkörper mit zumindest einer im wesentlichen rechteckigen Heizkörperplatte, die parallele wasserführende Kanäle aufweist, an denen auf der Rückseite der Heizkörperplatte zumindest ein gewellter Konvektor angebracht ist. Derartige auch als Flachheizkörper bezeichnete Heizkörper sind üblicherweise aus Stahlblech hergestellt, in welches Sicken oder Wellen zur Ausbildung der parallelen wasserführenden Kanäle eingepreßt sich; zwei derart gepreßte Blechhalbschalen werden dann randseitig zur Ausbildung der Heizkörperplatte verschweißt. Für derartige Heizkörper sind Bauhöhen zwischen etwa 300 bis 900 mm und Baulängen zwischen etwa 400 bis 3000 mm üblich, wobei im eingebauten Zustand des Heizkörpers die Bauhöhe die vertikale Erstreckung und die Baulänge die horizontale Erstreckung des Heizkörpers bezeichnet.

Der Konvektor ist üblicherweise als gewelltes Blech ausgebildet und auf die Rückseite des Heizkörpers aufgeschweißt, und zwar so, daß die Längserstreckung der Konvektorwellen parallel zu den wasserführenden Kanälen der Heizkörperplatte verläuft. Üblicherweise sind jeweils aufeinanderfolgende Wellen des Konvektors auf aufeinanderfolgende wasserführende Kanäle aufgeschweißt.

Derartige Heizkörper haben sich bewährt und haben werden in großen Stückzahlen hergestellt. Die voranstehend angegebenen üblichen Bauhöhen und Baulängen sind im wesentlichen durch architektonische Vorgaben bestimmt wie etwa die Abmessungen von Heizkörpernischen in zu beheizenden Räumen, den Abstand zwischen Fensterbänken und dem Fußboden in diesen Räumen, und dergleichen.

Die Fertigung der Heizkörper erfolgt im industriellen Maßstab durch Stanzen und Pressen von Blechen, wobei dann zwei gepreßte Blechhalbschalen aufeinandergelegt und auf einer Schweißstraße randseitig miteinander verschweißt werden. Die maximale Breite dieser Fertigungseinrichtungen ergibt sich daher aus der maximalen Bauhöhe der herzustellenden Heizkörper. Da derartige Fertigungseinrichtungen für Heizkörper einen sehr hohen Kapitalbedarf erfordern, bedeutet dies gleichzeitig, daß Heizkörper mit die üblichen Bauhöhen, etwa maximal 900 mm, übersteigenden Bauhöhen nicht mehr auf den üblichen Fertigungsanlagen hergestellt werden können und daher in aufwendiger Einzelfertigung produziert werden müßten.

Der Heizungstechniker wird ohnehin üblicherweise nicht auf die Idee verfallen, einen Raumheizkörper, insbesondere einen Niedertemperaturheizkörper, durch Erhöhung der Bauhöhe zu vergrößern, sondern eine Vergrößerung der Heizfläche immer durch Erhöhen der Baulänge (also in horizontaler Richtung) vornehmen, da es darum geht, kühle Luft zu erwärmen, die bei der Erwärmung nach oben steigt.

Es ist allerdings eine der vorliegenden Erfindung zugrunde liegende Erkenntnis, daß es dennoch lohnenswert sein könnte, unter bestimmten Bedingungen von diesem allgemeinen und anerkannten Prinzip abzugehen. Wenngleich auch üblicherweise bei Heizkörpern der Wärmeleistungsgrad im Vordergrund steht, so kann es dennoch sinnvoll sein, für bestimmte Einsatzzwecke eine gewisse Verringerung der Leistungsfähigkeit in Kauf zu nehmen, wenn demgegenüber andere erhebliche Vorteile erzielt werden können.

Derartige besondere Verhältnisse treten beispielsweise in Bädern auf, etwa bei einer Badrenovierung oder wenn, beispielsweise für die Übergangszeiten des Jahres, zusätzliche Heizleistung zur Verfügung gestellt werden soll, die unabhängig von der üblichen, auf Winterbedingungen ausgelegten Heizung arbeitet, oder aber bei extremen Bedingungen zugeschaltet werden kann.

Da allerdings der verfügbare Raum in Bädern in den meisten Fällen bereits durch Sanitär- und andere Einrichtungen verbaut ist, ließe sich ein üblicher Heizkörper in üblicher Anordnung nicht mehr anbringen. Häufig sind jedoch noch verhältnismäßig schmale Wandbereiche verfügbar, so daß ein Heizkörper hierfür allerdings zur Erzielung einer vorgegebenen Leistung eine geringe Baulänge (horizontal), jedoch eine verhältnismäßig große Bauhöhe (vertikal) aufweisen müßte. Übliche mit Konvektoren versehene Heizkörper großer Baulänge, aber geringer Bauhöhe können selbst dann für den speziellen Einsatzzweck nicht verwendet werden, wenn sie um 90° gedreht an der Wand eines Bades angebracht würden. Dann verlaufen nämlich die Wellen des Konvektors nach Anbringung des Heizkörpers in horizontaler Richtung, so daß eine Luftzirkulation entlang des Heizkörpers von unten nach oben nicht stattfinden könnte. Die parallele Anordnung der Längsrichtung der Wellen des Konvektors zu den wasserführenden Kanälen der Heizkörperplatte ist jedoch deswegen gewählt, damit auf einer möglichst großen Fläche ein Wärmekontakt zwischen dem jeweiligen wasserführenden Kanal und dem entsprechenden Abschnitt des Konvektors erreicht werden kann; daher wird ein Fachman von dieser im Stand der Technik üblichen Anordnung auch nicht abgehen.

Der Erfindung liegt daher die Aufgabe zugrunde, einen Heizkörper bereitzustellen, der auch bei unüblichen Verhältnissen einsetzbar ist, insbesondere mit einer Bauhöhe, die die übliche maximale Bauhöhe übersteigt, der aber dennoch auf den üblichen Fertigungseinrichtungen herstellbar ist.

Gemäß der vorliegende Erfindung wird die Aufgabe gelöst durch einen Heizkörper mit zumindest einer im wesentlichen rechteckigen Heizkörperplatte, die parallele wasserführende Kanäle aufweist, an denen auf der Rückseite der Heizkörperplatte zumindest ein gewellter Konvektor angebracht ist, wobei die Längserstreckung des Konvektors quer zur Längserstreckung der Kanäle und parallel zur Bauhöhe des Heizkörpers verläuft.

In überraschender Abkehr vom Stand der Technik, bei welchem die Längserstreckung der Wellen oder Sicken des Konvektors parallel zur Längserstreckung der Kanäle verläuft, wird daher gemäß der Erfindung eine Anordnung vorgeschlagen, bei welcher der Konvektor quer, also um 90° gedreht, gegenüber der Längserstreckung der wasserführenden Kanäle an diesen angebracht ist. Damit ist eine Luftzirkulation durch den Konvektor in vertikaler Richtung, also der Richtung der Bauhöhe des Heizkörpers, möglich. Für derartige spezielle Einsatzzwecke wird daher eine gewisse Verringerung der Heizleistung in Kauf genommen, die sich daraus ergibt, daß nunmehr gemäß der vorliegenden Erfindung nicht mehr jede Welle oder Längssicke des Konvektors entlang eines wasserführenden Kanals verläuft und auf diesem befestigt, üblicherweise festgeschweißt ist, sondern nunmehr sich eine Längssicke des Konvektors über mehrere wasserführende Kanäle erstreckt. Zwischen aufeinanderfolgenden Kanälen liegt daher der Konvektor nicht auf der Heizkörperplatte auf.

Gemäß der Erfindung werden erhebliche Vorteile dadurch erzielt, daß der Heizkörper gemäß der vorliegenden Erfindung trotz seiner außergewöhnlichen Maße auf üblichen Fertigungsstraßen hergestellt werden kann. Die Heizkörperplatten für die erfindungsgemäßen Heizkörper können auf übliche Weise gepreßt werden, wobei sich nunmehr bei der Erfindung die Sicken für die wasserführenden Kanäle in Richtung der Baulänge, also im eingebauten Zustand des Heizkörpers horizontal, erstrecken. Es können auch übliche Konvektorbleche verwendet werden; da deren Bauhöhe ebenfalls durch die üblichen Bauhöhen festgelegt ist, werden für einen erfindungsgemäßen Heizkörper dann, wenn dessen Bauhöhe die übliche Bauhöhe übersteigt, mehrere übliche Konvektorbleche aufeinander folgend in Richtung der Bauhöhe des Heizkörpers vorgesehen. Der Spalt zwischen aufeinanderfolgenden Konvektorblechen ermöglicht in vorteilhafter Weise ein seitliches Einströmen von Frischluft.

Gemäß der Erfindung wird daher ein Heizkörper zur Verfügung gestellt, dessen außergewöhnliche Anordnung überhaupt erst die Fertigung auf den üblichen Fertigungsstraßen und damit eine gewerbliche Anwendbarkeit in größeren Maßstab gestattet. Da der erfindungsgemäße Heizkörper ebenso kostengünstig produziert werden kann wie bisher nach dem Stand der Technik übliche Heizkörper, lassen sich durch Einsatz des erfindungsgemäßen Heizkörpers völlig neue Anwendungsgebiete erschließen, die den bisher bekannten Heizkörpern nicht zugänglich waren, insbesondere für Zusatzheizkörper, für Bausanierungen, oder für den Einsatz in Bädern.

Gerade beim Einsatz in Bädern kommt jedoch häufig ein zusätzliches Problem zum Tragen, welches darin besteht, daß sich in Bädern die Luftfeuchtigkeit erheblich ändert und sich daher häufig ein erheblicher Kondenswasserniederschlag ergibt. Weiterhin wird in Bädern besonders auf Saüberkeit geachtet. Nun lassen sich Plattenheizkörper aufgrund ihrer im wesentlichen glatten Oberfläche, welche nur durch die Sicken für die wasserführenden Kanäle geprägt ist, gut abwischen. Der Randbereich, in welchem die Halbschalen der Heizkörperplatte zusammengeschweißt sind, ist jedoch recht scharfkantig, wodurch es beim Abwischen in diesem Bereich zu Abschürfungen und dergleichen kommen kann; dies könnte dazu führen, daß in diesem Bereich ein Abwischen unterlassen wird. Hierzu wird gemäß einer besonders vorteilhaften Ausgestaltung der Erfindung vorgeschlagen, daß entlang der Außenkanten der Heizkörperplatte Kantenabdeckprofile vorgesehen sind. Derartige Kantenabdeckprofile lassen sich mit abgerundeten Kanten versehen, wodurch die genannten Probleme entfallen.

Vorzugsweise sind die Kantenabdeckprofile auf die Außenkanten der Heizkörperplatte aufsteckbar ausgebildet. Dann lassen sich nämlich übliche Heizkörperplatten verwenden, die nur in einem zusätzlichen Arbeitsschritt durch Aufstecken mit den Kantenabdeckprofilen versehen werden.

Die seitlichen, sich im wesentlichen entlang der Bauhöhe des erfindungsgemäßen Heizkörpers erstreckenden Kantenabdeckprofile weisen vorzugsweise jeweils einen zur Rückseite des Heizkörpers vorspringenden Schenkel auf. Die Tiefe des Schenkels sollte so bemessen sein, daß der Heizkörper in seiner gesamten Tiefe (Dicke) seitlich abgedeckt ist. Die oben und unten vorgesehenen Kantenabdeckprofile sollten dagegen keine derartigen Schenkel aufweisen, um die Luftzirkulation in vertikaler Richtung nicht zu behindern.

Für den Einsatz insbesondere in Bädern, aber auch an sonstigen Orten, an denen häufig oder gelegentlich Handtücher, Kleidungsstücke, und dergleichen zu trocknen sind, empfiehlt sich eine vorteilhafte Ausgestaltung des erfindungsgemäßen Heizkörpers, bei welchem an der Vorderseite des Heizkörpers zumindest ein Handtuchhalter vorgesehen ist.

Der Handtuchhalter kann als Stange ausgebildet sein, welche zwei in Richtung auf den Heizkörper quer zur Stange vorspringende Endabschnitte aufweist, mit denen die Stange an dem Heizkörper befestigt ist.

Vorteilhafterweise sind die seitlichen, sich im wesentlichen entlang der Bauhöhe erstreckenden Kantenabdeckprofile jeweils mit einer Halterung versehen, die jeweils ein Ende der Stange haltert. Dann lassen sich beispielsweise Ausführungsformen des Heizkörpers mit und ohne Handtuchhalter einfach durch unterschiedliche Ausbildungen der seitlichen Kantenabdeckprofile, nämlich einerseits mit und andererseits ohne Halterung für die Stange, verwirklichen.

Vorzugsweise sind zu diesem Zweck das jeweilige Kantenabdeckprofil und die zugehörige Halterung einstückig miteinander ausgebildet.

Als bevorzugter Werkstoff für die Kantenabdeckprofile empfiehlt sich ein geeigneter Kunststoff, der bei den Betriebstemperaturen des Heizkörpers stabil ist und dessen Oberflächenbeschaffenheit so ausgewählt ist, daß sich eine glatte, gut abwischbare und verschleißbeständige Oberfläche ergibt.

Die Erfindung wird nachstehend anhand zeichnerisch dargestellter Ausführungsbeispiele näher erläutert, aus welchen weitere Vorteile und Merkmale hervorgehen.

Es zeigen:

Fig. 1 eine Perspektivansicht, teilweise weggeschnitten, eines erfindungsgemäßen Heizkörpers; und

Fig. 2 einen Schnitt entlang der Linie II-II von Figur 1.

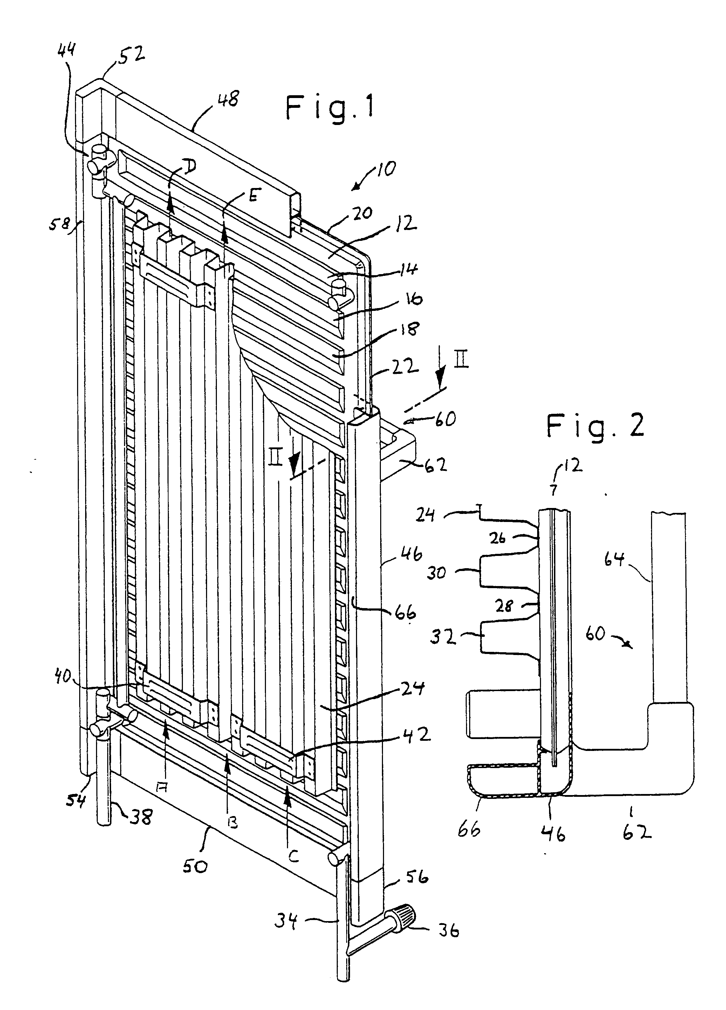

In Figur 1 ist ein Heizkörper gemäß der vorliegenden Erfindung allgemein mit der Bezugsziffer 10 bezeichnet.

Eine Heizkörperplatte 12 ist mit Sicken zur Ausbildung paralleler wasserführender Kanäle versehen, die in Figur 1 auf einer Seite der Heizkörperplatte 12 sichtbar und beispielhaft mit den Bezugsziffern 14, 16, 18 bezeichnet sind.

Die beiden Halbschalen der Heizkörperplatte 12, von denen in Figur 1 nur eine sichtbar ist, sind an den Rändern zusammengeschweißt, wie beispielhaft anhand des oberen Randes 20 und eines seitlichen Randes 22 gezeigt ist.

Ein entsprechend abgekantetes gewelltes Konvektorblech 24 ist auf der Rückseite der Heizkörperplatte 12 an dieser angeschweißt. Die "Wellen" des Konvektorblechs 24 sind im wesentlichen rechteck- oder trapezförmig. Wie noch deutlicher aus Figur 2 hervorgeht, folgt auf einen vorspringenden Bereich 26 des Konvektorblechs 24 ein rückspringender Bereich 30, auf diesen wiederum ein vorspringender Bereich 28, und auf diesen wiederum ein rückspringender Bereich 32. Die vorspringenden Bereiche 26, 28 sind jeweils mit sämtlichen Kanälen 14, 16, 18,... der Heizkörperplatte 12 verbunden; die Längserstreckung der Kanäle 14, 16, 18 verläuft daher quer zur Längserstreckung der Wellen 26, 20, 28, 32 des Konvektors 24, wie besonders deutlich aus Figur 1 hervorgeht.

In der in Figur 1 dargestellten Einbaulage des Heizkörpers 10 kann daher die Luft an der Rückseite des Heizkörpers 10 beziehungsweise der Rückseite der Heizkörperplatte 12 durch die Wellen des Konvektors 24 in vertikaler Richtung fließen, also in der durch die Pfeile A, B, C, D, E angedeuteten Richtung.

Der Zulauf zur Heizkörperplatte 10 ist durch ein Zulaufrohr 34 angedeutet, an welchem ein schematisch dargestelltes Thermostatventil 36 vorgesehen ist. Der Ablauf erfolgt durch ein Rohr 38.

Mit vier Halterungen, von denen drei in Figur 1 dargestellt sind und zwei beispielhaft mit den Bezugsziffern 40, 42 bezeichnet sind, wird der Heizkörper 10 mittels geeigneter Befestigungseinrichtungen an einer Wand befestigt.

Die Außenkanten 20, 22 und die beiden übrigen, nicht mit Bezugsziffern bezeichneten Außenkanten der Heizkörperplatte 12 sind durch Kantenabdeckprofile 44, 46, 48, 50, 52, 54, 56 aus Kunststoff abgedeckt. Hierbei bilden die Kantenabdeckprofile 48, 50 die obere beziehungsweise untere Abdeckung und die Kantenabdeckprofile 44, 46 die seitlichen Randabdeckungen der Heizkörperplatte 12. In den Ecken sind gesonderte Kantenabdeckprofile, beispielsweise 52, 54, 56 vorgesehen, die jeweils ein im wesentlichen horizontal verlaufendes Kantenabdeckprofil 48, 50 mit einem seitlichen Kantenabdeckprofil 44 beziehungsweise 46 verbinden. Die Kantenabdeckprofile 44-56 sind so ausgebildet, daß die längeren Kantenabdeckprofile 48, 50, 44, 46 auf die Außenkanten 20, 22 und so weiter der Heizkörperplatte 12 aufschnappen und dort durch Rastung festgehalten sind, während die Eckstücke, also die Kantenabdeckprofile 52, 54, 56, mit den zugehörigen längeren Kantenabdeckprofilen 48, 44 beziehungsweise 44, 50 beziehungsweise 50, 56 durch Rastung einschnappbar verbunden sind.

Weiterhin geht aus Figur 1 hervor, daß die seitlichen Kantenabdeckprofile 44, 46 mit einem rückspringendem, also zur Rückseite des Heizkörpers 10 vorspringenden, Schenkel 58 beziehungsweise 66 versehen sind. Der Schenkel 66 des Kantenabdeckprofils 46 ist noch einmal besonders deutlich in der Schnittdarstellung der Figur 2 dargestellt.

Die Schenkel 58, 66 der seitlichen Kantenabdeckprofile 44, 46 bilden eine seitliche Verkleidung des gesamten Heizkörpers 10 aus. Dagegen sind das obere beziehungsweise untere Kantenabdeckprofil 48, 50 nicht mit einem derartigen Schenkel versehen, um die ungehinderte Luftströmung in Richtung der Pfeile A-E nicht zu stören.

Weiterhin ist der Heizkörper 10 mit einem Handtuchhalter 60 versehen, der im wesentlichen aus einer Handtuchhalterstange 64 besteht, die in seitlichen Halterungen aufgenommen ist, von denen in Figuren 1, 2 nur die eine Halterung 62 erkennbar ist. Hierbei ist, wie besonders aus Figur 2 deutlich wird, die Halterung 62 mit dem seitlichen Kantenabdeckprofil 46 verbunden, vorzugsweise sogar einstückig ausgebildet. Die Anordnung der anderen Halterung für die Stange 64 an dem anderen seitlichen Kantenabdeckprofil 44 erfolgt auf entsprechende Weise.

Selbstverständlich kann auch statt eines Handtuchhalters 64 eine Anordnung aus zwei Handtuchhaltern vorgesehen werden, in der in den Figuren 1, 2 gezeigten Art, wobei vorzugsweise der untere Handtuchhal ter weiter von der Vorderseite des Heizkörpers 10 ab steht als der obere Handtuchhalter.

## Ansprüche

1. Heizkörper mit zumindest einer im wesentlichen rechteckigen Heizkörperplatte (12), die parallele wasserführende Kanäle (14, 16, 18) aufweist, an denen auf der Rückseite der Heizkörperplatte zumindest ein gewellter Konvektor (24) angebracht ist, dadurch **gekennzeichnet**, daß die Längserstreckung des Konvektors (24) quer zur Längserstreckung der Kanäle (14, 16, 18) und parallel zur Bauhöhe des Heizkörpers (10) verläuft.

2. Heizkörper nach Anspruch 1, dadurch **gekennzeichnet**, daß die Bauhöhe des Heizkörpers größer ist als dessen Baulänge.

3. Heizkörper nach Anspruch 2, dadurch **gekennzeichnet**, daß zwei oder mehrere Konvektoren vorgesehen sind, die in Richtung der Bauhöhe des Heizkörpers aufeinander folgen.

4. Heizkörper nach einem der Ansprüche 1 bis 3, dadurch **geken nzeichnet**, daß entlang der Außenkanten der Heizkörperplatte Kantenabdeckprofile (44, 46, 48, 50, 52, 54, 56) vorgesehen sind.

5. Heizkörper nach Anspruch 4, dadurch **gekennzeichnet**, daß die Kantenabdeckprofile (44-56) auf die Außenkanten (20, 22) der Heizkörperplatte (12) aufsteckbar ausgebildet sind.

6. Heizkörper nach Anspruch 4 oder 5, dadurch **gekennzeich net**, daß die seitlichen sich im wesentlichen entlang der Bauhöhe des Heizkörpers (10) erstreckenden Kantenabdeckprofile (44, 46) einen zur Rückseite des Heizkörpers vorspringenden Schenkel (58, 66) aufweisen.

7. Heizkörper nach einem der Ansprüche 1 bis 6, dadurch **gekenn zeichnet**, daß an der Vorderseite des Heizkörpers (10) zumindest ein Handtuchhalter (60) vorgesehen ist.

8. Heizkörper nach Anspruch 7, dadurch **gekennzeichnet**, daß die seitlichen sich im wesentlichen entlang der Bauhöhe erstreckenden Kantenabdeckprofile (44, 46) jeweils eine Halterung (62) aufweisen, die jeweils ein Ende einer Stange (64) haltert.

9. Heizkörper nach Anspruch 8, dadurch **gekennzeichnet**, daß das jeweilige Kantenabdeckprofil (46) und die zugehörige Halterung (62) einstückig ausgebildet sind.

10. Heizkörper nach einem der Ansprüche 4 bis 9, dadurch **gekennzeichnet**, daß die Kantenabdeckprofile aus Kunststoff bestehen.

11. Heizkörper nach einem der Ansprüche 5 bis 10, dadurch **gekennzeichnet**, daß die Kantenabdeckprofile mit Rastmitteln versehen sind.

Fig.1

Fig. 2